# EUROPEAN PATENT APPLICATION

(11) **EP 4 268 954 A1**
(43) Date of publication of application: **01.11.2023**
(21) Application number: 22752632.4
(22) Date of filing: 01.02.2022
(51) Int. Cl.: B01J 35/02, B01J 35/04, F02D 29/02, B01D 53/94, F01N 3/10, F01N 3/20, F01N 3/28

(54) **OHMIC HEATING-TYPE EXHAUST GAS PURIFICATION CATALYST SYSTEM AND EXHAUST GAS PURIFICATION METHOD**

(30) Priority: 10.02.2021 JP 2021019606
(71) Applicant: CATALER CORPORATION, Kakegawa-shi, Shizuoka 437-1492 (JP)
(72) Inventor: ONOE, Ryota, Kakegawa-shi, Shizuoka 437-1492 (JP); HORI, Junichi, Kakegawa-shi, Shizuoka 437-1492 (JP); TAKASU, Ryosuke, Kakegawa-shi, Shizuoka 437-1492 (JP); OHASHI, Tatsuya, Kakegawa-shi, Shizuoka 437-1492 (JP); OISHI, Shunsuke, Kakegawa-shi, Shizuoka 437-1492 (JP)
(74) Representative: Kramer Barske Schmidtchen Patentanwälte PartG mbB
(86) International application number: PCT/JP2022/003731
(87) International publication number: WO 2022/172804

(57) **Abstract**

The present invention provides an ohmic heating-type exhaust gas purification catalyst system. The ohmic heating-type exhaust gas purification catalyst system is configured to perform, based on information of temperature of a catalyst bed input from a temperature detector of an ohmic heating-type exhaust gas purification device, electric current pass control including controls of (1) causing an electric current to pass through a pair of electrodes when the temperature of the catalyst bed is equal to or lower than a first threshold temperature T1 set in a range of 350 ± 25 °C, (2) not causing an electric current to pass through the pair of electrodes when the temperature of the catalyst bed exceeds the first threshold temperature T1 and is equal to or lower than a second threshold temperature T2 set in a range of 450 ± 25 °C, (3) causing an electric current caused to pass through the pair of electrodes when the temperature of the catalyst bed exceeds the second threshold temperature T2 and is equal to or lower than a third threshold temperature T3 set to be equal to or higher than 550 °C, and (4) not causing an electric current to pass through the pair of electrodes when the temperature of the catalyst bed exceeds the third threshold temperature T3.

## Description

### [Technical Field]

The present invention relates to an ohmic heating-type exhaust gas purification catalyst system that is provided in an exhaust system of an internal combustion engine of a vehicle. The present invention also relates to an exhaust gas purification method performed by the ohmic heating-type exhaust gas purification catalyst system. Moreover, the present invention relates to a control program of the ohmic heating-type exhaust gas purification system.

The present application claims priority from Japanese Patent Application No. 2021-019606 filed on February 10, 2021, the entire disclosure of which is incorporated by reference herein.

### [Background Art]

As an exhaust gas purification catalyst used for removing harmful components, such as hydrocarbon (HC), carbon monoxide (CO), nitrogen oxide (NOₓ) or the like, from exhaust gas emitted from an internal combustion engine, such as a vehicle engine or the like, by an oxidation or reduction reaction, a so-called three-way catalyst (TWC) is used. As a three-way catalyst, for example, a porous carrier composed of an inorganic oxide, such as alumina (Al₂O₃), zirconia (ZrO₂), or the like, and carrying a metal that functions as an oxidation catalyst and/or a reduction catalyst (which will be hereinafter sometimes referred to as a "catalytic metal"), that is, typically, a porous carrier carrying a precious metal, such as such as palladium (Pd), rhodium (Rh), or the like, that belongs to a platinum group, is used. For example, a three-way catalyst in which a porous carrier carries Pd as an oxidation catalyst and Rh as a reduction catalyst is widely used.

The three-way catalyst exhibits a high catalytic activity under a predetermined high temperature condition. Accordingly, in a state where the exhaust system is still cold at an engine start time or the like, an activity of the three-way catalyst provided in the exhaust system is low, as compared to that in a high temperature state when a long continuous traveling is performed by an engine. Therefore, there are demands for a technology that can effectively purify exhaust gas even under such a situation.

Especially, in recent years, hybrid vehicles and so-called eco-cars that include an idling stop mechanism and/or a fuel cut mechanism have been widely used. In such a vehicle, an engine is often stopped even during driving, a cold state of an exhaust system at an engine start time or the like is likely to occur even after driving has been started, and therefore, there are demands for a technology that can effectively purify exhaust gas with a three-way catalyst even under such a situation.

In order to meet the above-described demands, ohmic heating-type (which will be also referred to as an electrically heated) exhaust gas purification catalyst devices that are catalyst devices each including a carrier, such as a honeycomb carrier or the like, and a three-way catalyst carried by the carrier, further include a pair of electrodes, are configured to supply power to the pair of electrodes to heat a catalytic metal, and are also referred to as EHCs have been developed.

As the EHCs, a type having a configuration in which an electric heater is attached to a catalyst device and a type having a configuration in which a catalyst is carried on a conductive carrier and an electric current is caused to pass through the carrier to generate heat have been known. For example, in PATENT DOCUMENT 1, an EHC in which an electrothermal heater used for causing temperature of a catalytic metal to rise is incorporated is described. In PATENT DOCUMENT 2, an EHC in which a carrier carrying a catalyst component of a NOₓ occlusion reduction catalyst is formed of a material that generates Joule heat by causing an electric current to pass therethrough is described.

### [Citation List]

### [Patent Literatures]

[Patent Literature 1] Japanese Laid-open Patent Publication No. 2004-176592
[Patent Literature 2] Japanese Laid-open Patent Publication No. 2005-233066

### [Summary of Invention]

Incidentally, although such an EHC can be used while heating a catalytic metal, the EHC is used in a relatively low temperature range in many cases, as compared to a normal exhaust gas purification catalyst device. This trend is highly likely to occur, especially, when the EHC is mounted on a hybrid vehicle or a vehicle having a fuel cut mechanism.

Accordingly, in order to use the EHC more effectively to perform exhaust gas purification, it is important to accurately grasp temperature characteristics that affect catalytic activity of the catalytic metal to be equipped and more precisely perform temperature control (heating control) of the catalytic metal in accordance with the temperature characteristics.

However, in order to accurately grasp temperature characteristics of, especially, a three-way catalyst in a relatively low temperature range, among catalytic metals, to effectively perform temperature control of the EHC, there is still room for improvement.

The present invention has been devised in order to improve temperature control of a three-way catalyst in the EHC, and provides an ohmic heating-type exhaust gas purification catalyst system and an exhaust gas purification method that allow performing temperature control effective especially for exhaust gas purification in a low temperature range. The present invention also provides a control program used for implementing the exhaust gas purification method.

It is common general technical knowledge in the relevant field that, as temperature of a catalytic metal used as a three-way catalyst, in other words, temperature of exhaust gas supplied to a catalyst bed (which will be also referred to as a catalyst layer) in a catalyst device from an internal combustion engine through an exhaust pipe rises, an exhaust gas purification performance of the catalytic metal used as a three-way catalyst increases.

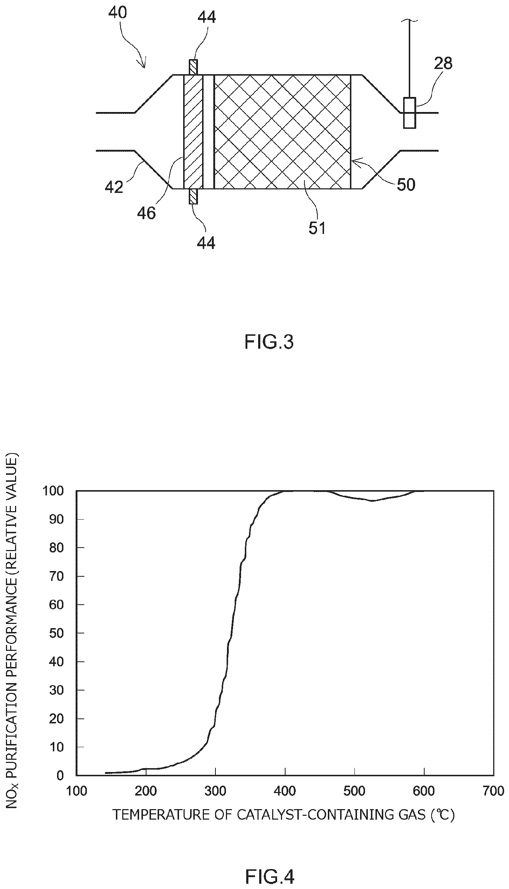

However, the inventors of the present invention focused on a more detailed relationship between an exhaust gas purification performance of a three-way catalyst and temperature of a catalyst bed and, in particular, temperature characteristics as illustrated in FIG. 4. In FIG. 4, the abscissa of a graph represents temperature (°C) of an exhaust gas supplied to a catalyst bed and the ordinate represents a purification rate of the nitrogen oxide (NOₓ) in the exhaust gas in terms of relative value when it is assumed that the purification rate at an exhaust gas temperature of 400 °C is 100. As clearly indicated in FIG. 4, until the temperature of the exhaust gas supplied to the catalyst bed reaches 450 °C, the NOₓ purification performance consistently rises. However, when the temperature of the exhaust gas supplied to the catalyst bed exceeds 450 °C, conversely, the NOₓ purification performance starts reducing and continues to reduce until the temperature of the exhaust gas reaches a range of 500 °C to 550 °C. Then, when the temperature of the exhaust gas exceeds the range of 500 °C to 550 °C and continues to rise, the NOₓ purification performance rises again.

In view of the above-described characteristics of a three-way catalyst in which a NOx purification performance reduces in a temperature range of approximately 450 °C to 550 °C, the inventors of the present invention arrived at the present invention.

According to the present invention, provided is a technology that can actively reduce a time during which exhaust gas purification treatment is performed in a temperature range of approximately 450 °C to 550 °C (which will be hereinafter referred to as a "NOₓ purification reduction temperature range") in which a NOₓ purification performance of a three-way catalyst relatively reduces even in an ohmic heating-type exhaust gas purification catalyst device mounted on a hybrid vehicle, such as an HV, a PHEV, or the like, or a so-called eco-car in which relatively low temperature exhaust gas is frequently discharged from an internal combustion engine (engine) to an exhaust system.

That is, an exhaust gas purification catalyst system disclosed herein performs purification of exhaust gas discharged from an internal combustion engine. The system includes an ohmic heating-type catalyst device that is arranged in an exhaust pipe of the internal combustion engine and performs purification of the exhaust gas discharged from the internal combustion engine, and includes an outer cylinder coupled to the exhaust pipe, a pair of electrodes, a catalyst unit including a catalyst bed that is contactable by the exhaust gas introduced into the outer cylinder and contains at least one type of catalytic metal that functions as a three-way catalyst, a heating element that generates heat when an electric current is caused to pass through the pair of electrodes to heat the catalyst bed, and a temperature detector that can detect temperature of the catalyst bed, and a controller that controls pass of the electric current to the pair of electrodes.

The controller of the ohmic heating-type exhaust gas purification catalyst system disclosed herein is configured to perform, based on information of the temperature of the catalyst bed input from the temperature detector, electric current pass control including controls of (1) causing an electric current to pass through the pair of electrodes when the temperature of the catalyst bed is equal to or lower than a first threshold temperature T1 set in a range of 350 ± 25 °C, (2) not causing an electric current to pass through the pair of electrodes when the temperature of the catalyst bed exceeds the first threshold temperature T1 and is equal to or lower than a second threshold temperature T2 set in a range of 450 ± 25 °C, (3) causing an electric current to pass through the pair of electrodes when the temperature of the catalyst bed exceeds the second threshold temperature T2 and is equal to or lower than a third threshold temperature T3 set to be equal to or higher than 550 °C, and (4) not causing an electric current to pass through the pair of electrodes when the temperature of the catalyst bed exceeds the third threshold temperature T3.

In another aspect, the present invention provides a method for purifying exhaust gas using a system disclosed herein. That is, an exhaust gas purification method disclosed herein is a method for purifying, using an ohmic heating-type catalyst device with the above-described configuration, the ohmic heating-type catalyst device being arranged in an exhaust pipe of an internal combustion engine, exhaust gas discharged from the internal combustion engine.

The method includes performing, based on information of the temperature of the catalyst bed acquired from the temperature detector, the above-described electric current pass control including the controls of (1) to (4).

In the ohmic heating-type exhaust gas purification catalyst system and the exhaust gas purification method each having the configuration described above, based on the information of the temperature of the catalyst bed acquired from the temperature detector provided in the catalyst device, the above-described electric current pass control including the controls of (1) to (4) can be performed.

Specifically, while the above-described system is operated, when the temperature of the catalyst bed is equal to or lower than T1, an electric current is caused to pass through the pair of electrodes to put the catalyst bed into a heating state and thus heat the catalytic metal. However, when the temperature of the catalyst bed exceeds T1 and is equal to or lower than T2, unlike a known technology, an electric current is not caused to pass through the pair of electrodes. Thus, for example, in purifying exhaust gas in a state where temperature of the internal combustion engine has not reached a sufficiently high temperature, it is possible to prevent the temperature of the catalyst bed from reaching the NOₓ purification reduction temperature range.

On the other hand, in a state where the temperature of the catalyst bed is likely to rise due to a continuous operation of the internal combustion engine, that is, specifically, when the temperature of the catalyst bed exceeds T2, an electric current is caused to pass through the pair of electrodes. Thus, it is enabled to promote the temperature of the catalyst bed to exceed the NOₓ purification reduction temperature range in a short time.

When the temperature of the catalyst bed exceeds T3, it is determined that sufficient exhaust gas purification can be realized even without performing electric heating, so that an electric current is not caused to pass through the pair of electrodes.

As described above, according to the ohmic heating-type exhaust gas purification catalyst system and the exhaust gas purification method disclosed herein, purification of exhaust gas from an internal combustion engine in which exhaust gas in a relatively low temperature range is frequently generated can be performed while effectively avoiding the above-described NOₓ purification reduction temperature range, as in an engine in a hybrid vehicle or some other eco-car.

In one preferred embodiment of the ohmic heating-type exhaust gas purification catalyst system disclosed herein, the controller is configured to further perform, when performing the control of (3), a control of (3-1) not causing an electric current to pass through the pair of electrodes in a mode in which combustion gas is not generated in the internal combustion engine. In one preferred embodiment of the exhaust gas purification method disclosed herein, the control of (3) further includes the control of (3-1).

According to the ohmic heating-type exhaust gas purification catalyst system and the exhaust gas purification method each having the configuration described above, unnecessary pass of an electric current can be avoided in a state where exhaust gas to be purified is not generated, so that energy saving can be realized.

Preferred examples of the mode in which the combustion gas is not generated in the internal combustion engine include idling stop or fuel cut.

During a so-called economy mode operation, the combustion gas is not generated in the internal combustion engine, and therefore, it is preferable that unnecessary pass of an electric current through the pair of electrodes is not caused.

In another preferred embodiment of the ohmic heating-type exhaust gas purification catalyst system and the exhaust gas purification method disclosed herein, the catalyst bed contains at least rhodium (Rh) as the catalytic metal.

In order to achieve an excellent effect for NOₓ reduction treatment using the ohmic heating-type exhaust gas purification catalyst system, the electric current pass control disclosed herein preferably includes rhodium as a three-way catalyst.

The ohmic heating-type exhaust gas purification catalyst system and the exhaust gas purification method disclosed herein are preferable especially for purification of exhaust gas in a relatively low temperature range generated from a gasoline engine or a diesel engine for a vehicle.

The present invention provides a control program that causes a computer to execute any one of the exhaust gas purification methods disclosed herein. The present invention provides a non-transitory computer-readable storage medium storing a control program to cause a computer to operate any one of the exhaust gas purification methods disclosed herein. The control program disclosed herein is recognized as a program that causes the controller of the ohmic heating-type exhaust gas purification catalyst system disclosed herein to execute the electric current pass control including the controls of (1) to (4).

### [Brief Description of Drawings]

[FIG. 1] FIG. 1 is a diagram schematically illustrating a configuration of an ohmic heating-type exhaust gas purification catalyst system according to one preferred embodiment.
[FIG. 2] FIG. 2 is a perspective view schematically illustrating an ohmic heating-type catalyst device according to one preferred embodiment.
[FIG. 3] FIG. 3 is a cross-sectional view schematically illustrating an ohmic heating-type catalyst device according to another preferred embodiment.
[FIG. 4] FIG. 4 is a graph illustrating a relationship between a NOₓ purification performance of a three-way catalyst and temperature of an exhaust gas supplied to a catalyst bed.
[FIG. 5] FIG. 5 is a flowchart illustrating electric current pass control treatment (main routine) according to one preferred embodiment.
[FIG. 6] FIG. 6 is a flowchart illustrating economy mode electric current pass control treatment (sub-routine) that can be included in the electric current pass control treatment according to one preferred embodiment.
[FIG. 7] FIG. 7 is a flowchart illustrating another economy mode electric current pass control treatment (sub-routine) that can be included in the electric current pass control treatment according to one preferred embodiment.
[FIG. 8] FIG. 8 is a functional block diagram of a controller according to one preferred embodiment.

### [Description of Embodiments]

Some preferred embodiments of a technology described herein will be described below with reference to the accompanying drawings. Note that matters other than matters specifically mentioned in this specification and necessary for the implementation of the technology disclosed herein can be understood as design matters carried out by those skilled in the art, based on the conventional art in the field. The technology disclosed herein can be implemented based on the contents disclosed in this specification and the common general technical knowledge in the field. Note that, in this specification, the notation "A to B" indicating a numerical range means "A or more and B or less."

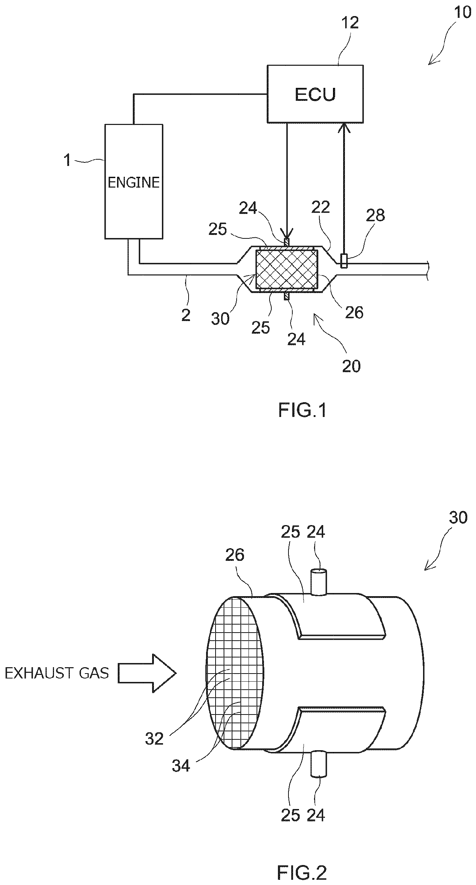

A rough configuration of one preferred embodiment of an ohmic heating-type exhaust gas purification catalyst system 10 disclosed herein is illustrated in FIG. 1.

The ohmic heating-type exhaust gas purification catalyst system 10 according to this preferred embodiment is a system incorporated in a vehicle, such as an automobile or the like, and includes an ohmic heating-type catalyst device (EHC) 20 and a controller (ECU) 12.

As illustrated in FIG. 1, the ohmic heating-type catalyst device 20 is coupled to a portion of an exhaust pipe 2 that is an exhaust system couped to an internal combustion engine (herein, gasoline engine for an automobile) 1. Note that, in this preferred embodiment, the internal combustion engine 1 is a gasoline engine, but may be a diesel engine in some other preferred embodiment.

The ohmic heating-type catalyst device 20 includes an outer cylinder 22 that is coupled to the exhaust pipe 2 to form a portion of the exhaust system, a catalyst unit 30 and a temperature detector 28 provided inside the outer cylinder 22, and a pair of (positive and negative) electrodes 24 coupled to a base material 26 forming a heating element that is provided in a portion of the outer cylinder 22 to be arranged inside the outer cylinder 22.

The outer cylinder 22 is formed of a material having excellent heat resistance, durability, and workability. Examples of the material include a metallic material (conductive material), such as stainless or the like, a ceramic material, or the like. The outer cylinder 22 may be formed of a same material as that of the exhaust pipe 2. The outer cylinder 22 may have a so-called tube shape with an internal space formed therein, and can have a shape, such as a rectangular tube shape or the like, in addition to a cylindrical shape.

As for the temperature detector 28, there is no particular limitation on a configuration thereof as long as the temperature detector 28 can measure temperature of exhaust gas (exhaust gas immediately after passing through the catalyst bed) that has flowed out of the catalyst unit 30. For example, a temperature sensor formed of a thermocouple can be employed as the temperature detector 28.

The catalyst unit 30 of the ohmic heating-type catalyst device (EHC) 20 according to this preferred embodiment may have a configuration illustrated in FIG. 2. Specifically, as illustrated in FIG. 2, the catalyst unit 30 includes the base material 26 with a tube shape having a honeycomb structure inside thereof and a pair of electrode layers 25 and a pair of electrodes (terminals) 24 formed on an outer peripheral surface such that the electrode layers 25 face each other with the base material 26 interposed therebetween and the electrodes 24 face each other with the base material 26 interposed therebetween. The electrode layers 25 have a function of diffusing an electric current to a surface of the base material 26 so as to efficiently heat a heating element (herein, the base material 26). An outer shape and a size of the electrode layers 25 can be set as appropriate.

The base material 26 according to this preferred embodiment is formed of a material that functions as a heating element that can be heated with Joule heat generated when an electric current is caused to pass through the pair of electrodes 24. For example, the base material 26 is formed of a nonmetallic material or a metallic material that can be heated by causing an electric current to pass therethrough.

Examples of a preferable nonmetallic heating element include a porous body

(for example, a monolith body of a honeycomb structure) having a regular cell structure formed of silicon carbide, molybdenum disilicide, or the like that has been made conductive by doping an impurity (nitrogen element (N) or the like). As a preferable metal heating element, a metal porous body (typically, a honeycomb structure) formed of a metal, such as a Ni-Cr base metal, a Fe-Cr-Al based metal, or the like, may be used. The base material 26 is formed of a member that functions as a heating element that can be heated with Joule heat generated when an electric current is caused to pass through the pair of electrodes 24, so that there is no need to separately provide a heating element. Therefore, it is not needed to ensure a space in which a heating element of a separate member is provided in the outer cylinder 22, so that the catalyst bed can be more efficiently installed.

Alternatively, as another preferred embodiment, as illustrated in FIG. 3, a heating element 46 may be provided separately from a base material 51 forming a catalyst unit 50. Specifically, in an ohmic heating-type catalyst device (EHC) 40 illustrated in FIG. 3, the heating element 46 formed of a ring heater coupled to a pair of electrodes 44 is arranged at an upstream side of the catalyst unit 50 in an exhaust gas flowing direction so as to be adjacent to the catalyst unit 50. Thus, temperature of a catalyst bed can be caused to rise by causing the ring heater (heating element) 46 to generate heat inside the outer cylinder 22.

As illustrated in FIG. 2, the base material 26 has a honeycomb structure including a plurality of cells 32 each of which has both ends at an exhaust gas inflow side and at an exhaust gas outflow side opened and partition walls 34 that partition adjacent cells 32. However, there is no particular limitation on a shape of each of the cells 32. The shape of each of the cells 32 may be not only a quadrangular shape, such as a square shape, a rectangular shape, or the like, but also, for example, a polygonal shape, such as a triangular shape, a hexagonal shape, an octagonal shape, or the like, a circular shape, or the like.

The base material 26 is not limited to the above-described regular honeycomb structure including the cells 32 and the partition walls 34, but may be, for example, a spongy porous body with irregular fine pores formed therein as long as exhaust gas smoothly flows through the fine pores.

Note that the base material 26 is not limited to a base material of a so-called straight flow type in which exhaust gas introduced into the cells 32 from the inflow side is discharged as it is from the outflow side through the cells 32. For example, the base material 26 may be a base material of a so-called wall through type in which exhaust gas introduced through cells each of which has only one end at the inflow side opened passes through porous partition walls to move to cells adjacent thereto each of which has only one end at the outflow side opened and is discharged from the outflow side of the cells 32.

An unillustrated catalyst bed is formed in each of the cells 32, specifically, on a surface of each of the partition walls 34 and/or in each of the partition walls 34. The catalyst bed (which will be also referred to as a catalyst layer) may be formed by a known catalyst device of this type and a special configuration is not required.

That is, each of the catalyst beds provided in the catalyst unit 30 according to this preferred embodiment includes at least catalytic metal particles that function as a three-way catalyst and a carrier carrying the catalytic metal particles.

Examples of the catalytic metal include, for example, a metal, such as palladium (Pd), rhodium (Rh), platinum (Pt), or the like, that belongs to a platinum group or some other metal that functions as an oxidation catalyst or a reduction catalyst. Since Pd and Pt are excellent in purification performance (oxidation purification capability) for monoxide and hydrocarbon and Rh is excellent in purification performance (reduction purification capability) for NOₓ, Pd, Pt, and Rh are especially preferable catalytic metals as three-way catalysts. In addition to Pd, Pt, and Rh, a metal formed of an alkali metal, an alkali earth metal, a transition metal, or the like may be used therewith. An average particle diameter of the catalytic metal based on electron microscope observation is preferably 0.5 nm or more and 50 nm or less, and more preferably 1 nm or more and 20 nm or less. However, there is no particular limitation on the average particle diameter.

There is no particular limitation on the carrier carrying the catalytic metal and forming the catalyst bed, as long as the carrier can carry catalytic metal particles, and a known carrier can be used as the carrier. For example, ceria (CeO₂), an inorganic material (a so-called OSC material), such as compound oxide (for example, cerium-zirconium compound oxide (CZ or ZC compound oxide)) containing ceria or the like, that has an oxygen storage capability (OSC), an oxide, such as alumina (Al₂O₃), titania (TiO₂), zirconia (ZrO₂), silica (SiO₂), or the like, or the like. Out of these materials, one can be used alone or two or more can be used in combination. The OSC material can function as a cocatalyst used for exhaust gas purification, and therefore, a carrier containing the OSC material is more preferable. A catalyst bed may further contain some other component (for example, a binder, an additive, or the like) than a catalyst component and a carrier.

There is no particular limitation on a content of the catalytic metal (three-way catalyst) in the catalyst bed. For example, with respect to an entire mass of the carrier contained in the catalyst bed, the content can be 0.01 mass percent or more and 10 mass percent or less, and is more preferably 0.1 mass percent or more and 5 mass percent or less.

The catalyst bed may have a simple single-layer structure and may have a multi-layer structure including two or more layers having different types of catalytic metals and different combination ratios. The ohmic heating-type exhaust gas purification catalyst system 10 disclosed herein can achieve efficient NOₓ purification performance especially in a low temperature range, and therefore, when the catalyst bed (catalyst layer) has a multi-layer structure, a same type of metal may be contained in a plurality of layers and different types of metals may be contained in the plurality of layers. Note that a thickness and a length of the catalyst bed may be determined as appropriate in accordance with a size of the cells 32 of the base material 26, a flow rate of exhausted gas supplied to the ohmic heating-type catalyst device 20, or the like. For example, the thickness of the catalyst bed can be 1 µm or more and 500 µm or less.

On the other hand, a controller 12 according to this preferred embodiment is a device that a computer forming an engine control unit (ECU) (which will be also referred to as an electronic controller) used for variously controlling an operation state of the internal combustion engine 1 works as. A configuration of the ECU itself may be similar to that used for a known automobile. The ECU is, for example, a microcomputer including an interface (I/F), a central processing unit (CPU) that executes an instruction of a control program, a read only memory (ROM) that stores the control program executed by the CPU, a random-access memory (RAM) that is used as a working area in which the program is developed, and a storage, such as a memory or the like, that stores a program and various types of data.

In the controller 12, a program that controls pass of an electric current to the pair of electrodes 24 disclosed herein is installed in the ECU in advance. The controller 12 is electrically coupled to the temperature detector 28 so as to acquire information of temperature of the catalyst bed from the temperature detector 28. The controller 12 is electrically coupled to an unillustrated power supplier (for example, a power generator interlocked with an in-vehicle battery or an internal combustion engine) and can perform on and off control of the pass of the electric current to the pair of electrodes 24 from the power supplier, based on the information of the temperature of the catalyst bed acquired from the temperature detector 28. Note that the above-described on and off control itself may be similar to on and off control of pass of an electric current in a known EHC, and therefore, further detailed description will be omitted.

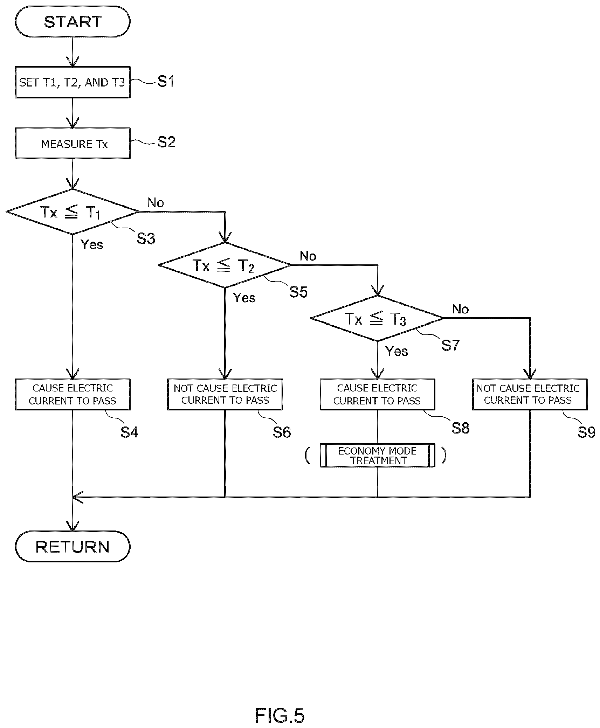

Next, execution of an electric current pass control program in the ohmic heating-type exhaust gas purification catalyst system 10 according to this preferred embodiment will be described with reference to a flow illustrated in FIG. 5.

The controller 12 recognizes that driving of an automobile is started and an operation of the internal combustion engine (a gasoline engine of a vehicle) 1 is started, and thus, starts electric current pass control. Specifically, when it is determined based on a signal input to the ECU from a crank position sensor separately provided in the internal combustion engine 1 that the internal combustion engine 1 is in operation, the controller 12 starts the electric current pass control. However, the controller 12 may be configured to start the electric current pass control at some other timing than the above-described timing. For example, a hybrid vehicle that is a so-called strong hybrid vehicle can travel using a driving in-vehicle battery and a motor even in a state where an engine is stopped. Therefore, in such a vehicle, an EHC is heated in advance in a driving mode in which the engine is not started when the vehicle starts, and therefore, electric current pass control in the ohmic heating-type exhaust gas purification catalyst system 10 according to this preferred embodiment may be started by an IG-ON of a driver (turning on of a main switch when driving is started).

As illustrated in FIG. 5, the controller 12 first sets a first threshold temperature T1, a second threshold temperature T2, and a third threshold temperature T3 (Step S1). At this time, T1 is set to any temperature in a range of 350 ± 25 °C, T2 is set to any temperature in a range of 450 ± 25 °C, and T3 is set to any temperature that is equal to or higher than 550 °C or more.

Next, the controller 12 inputs temperature data from the temperature detector 28 at predetermined intervals from temperature detector 28 during driving (typically, during an operation of the internal combustion engine 1) (Step S2). Then, it is determined based on the input temperature data (catalyst bed temperature information) whether temperature Tx of the catalyst bed is equal to or lower than the first threshold temperature T1 (Step S3). When it is determined that the temperature Tx of the catalyst bed is equal to or lower than the first threshold temperature T1, an electric current is caused to pass through the pair of electrodes 24 (Step S4). Then, the process returns to processing of Step S1.

On the other hand, when it is determined in Step S3 that the temperature Tx of the catalyst bed is not equal to or lower than the first threshold T1, that is, exceeds the first threshold T1, it is determined whether the temperature Tx of the catalyst bed is equal to or lower than the second threshold temperature T2 next (Step S5). When it is determined that the temperature Tx of the catalyst bed is equal to or lower than the second threshold temperature T2 (that is, T1 < Tx ≤ T2), an electric current is not caused to pass through the pair of electrodes 24 (Step S6). Then, the process returns to processing of Step S1.

When it is determined in Step S5 that the temperature Tx of the catalyst bed is not equal to or lower than the second threshold temperature T2, that is, exceeds the second threshold temperature T2, it is determined whether the temperature Tx of the catalyst bed is equal to or lower than the third threshold temperature T3 next (Step S7). When it is determined that the temperature Tx of the catalyst bed is equal to or lower than the third threshold temperature T3 (that is, T2 < Tx ≤ T3), an electric current is caused to pass through the pair of electrodes 24 (Step S8). Then, the process returns to processing of Step S1.

At this time, when, for the operation of the internal combustion engine 1, a predetermined economy mode is set, there is an option of executing another subroutine treatment. The subroutine treatment will be described later.

When it is determined in Step S7 that the temperature Tx of the catalyst bed is not equal to or lower than the third threshold T3, that is, exceeds the third threshold temperature T3, the catalyst bed has been sufficiently heated, and therefore, an electric current is not caused to pass through the pair of electrodes 24 (Step S9). Then, the process returns to processing of S1.

By executing the electric current pass control program according to this preferred embodiment including Step S1 to S9 described above, as in an engine in a hybrid vehicle or a vehicle called eco-car having a so-called economy mode, purification of exhaust gas from the internal combustion engine 1 in which exhaust gas in a relatively low temperature range is frequently generated can be efficiently performed while effectively avoiding the NOₓ purification reduction temperature range described above.

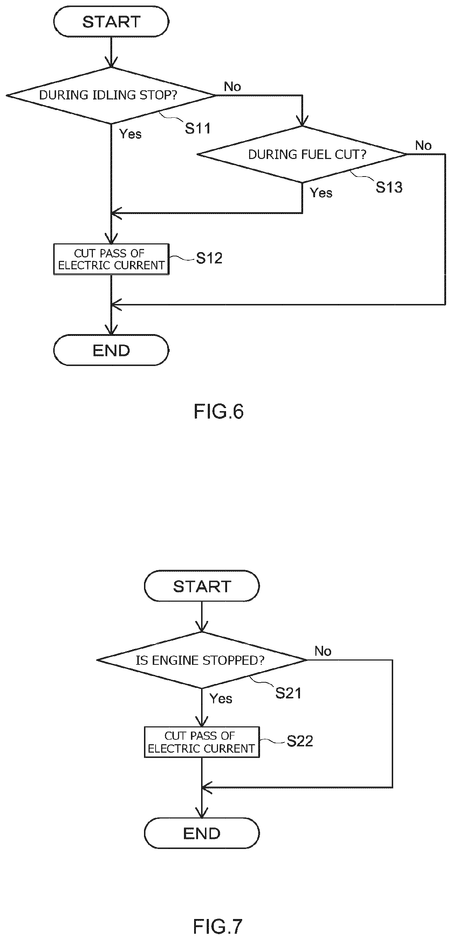

Next, execution of an economy mode electric current pass control treatment (subroutine) program associated with the above-described electric current pass control treatment (main routine) will be described with reference to a flow illustrated in FIG. 6.

Note that, in this preferred embodiment, a subroutine is set for a case, as a mode in which combustion gas is not generated in the internal combustion engine 1, both an idling stop mechanism and a fuel cut mechanism are included. However, in accordance with a type of the eco-car (for example, eco-car specifications for a mild hybrid vehicle or a pure engine car with a smaller motor than that of a strong hybrid vehicle and a driving battery with a smaller capacity than that of the strong hybrid vehicle), the subroutine treatment may be set with only one of the idling stop mechanism and the fuel cut mechanism.

As illustrated in FIG. 6, when it is determined in Step S7 (see FIG. 5) that the temperature Tx of the catalyst bed is equal to or lower than the third threshold temperature T3 (that is, T2 < Tx ≤ T3), successively to Step S8, the economy mode electric current pass control treatment (subroutine) program is sta rted.

Specifically, an operation mode of the internal combustion engine 1 controlled by the ECU at that time is determined. First, it is determined whether an idling stop operation is performed in a current operation mode (Step S11).

When it is determined that the idling stop operation is performed in the operation mode, in order to avoid unnecessary power consumption, pass of an electric current to the pair of electrodes 24 is cut (Step S12).

On the other hand, when it is determined in Step S11 that the idling cut operation is not performed, it is determined whether a fuel cut operation is performed in the current operation mode (Step S13). Also, when it is determined that the fuel cut operation is performed in the operation mode, in order to avoid unnecessary power consumption, pass of an electric current to the pair of electrodes 24 is cut (Step S12). On the other hand, when it is determined in Step S13 that the fuel cut operation is not performed, the economy mode electric current pass control treatment (subroutine) is terminated without cutting pass of an electric current to the pair of electrodes 24.

Alternatively, as another preferred embodiment of the economy mode electric current pass control treatment (subroutine) program, as illustrated in FIG. 7, subroutine treatment may be set in consideration of temporary operation stop of the internal combustion engine 1 in a predetermined form. For example, in a vehicle, such as the above-described strong hybrid vehicle (HEV) or a vehicle called plugin hybrid vehicle (PHEV), a mode in which the engine is temporarily stopped can frequently occur during driving, and therefore, it is preferable to incorporate the economy mode electric current pass control treatment in the above-described form in a system.

As illustrated in FIG. 7, when it is determined in Step S7 (see FIG. 5) that the temperature Tx of the catalyst bed is equal to or lower than the third threshold temperature T3 (that is, T2 < Tx ≤ T3), successively to Step S8, the economy mode electric current pass control treatment (subroutine) program in this form is started.

Specifically, the operation mode of the internal combustion engine 1 controlled by the ECU at that time is determined. That is, it is determined whether the engine is stopped in the current operation mode (Step S21). When it is determined that the engine is stopped in the operation mode, pass of an electric current to the pair of electrodes 24 is cut (Step S22). On the other hand, when it is determined in Step S21 that the engine is not stopped (that is, the engine is in operation), the economy mode electric current pass control treatment (subroutine) is terminated without cutting pass of an electric current to the pair of electrodes 24.

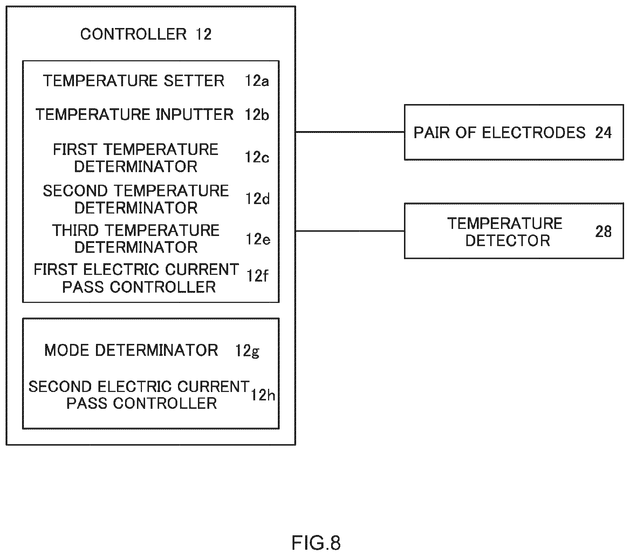

FIG. 8 is a functional block diagram of the controller 12 according to one preferred embodiment. The controller 12 is communicably coupled to the pair of electrodes 24 and the temperature detector 28 provided in the ohmic heating-type catalyst device 40 and is configured to control the pair of electrodes 24 and the temperature detector 28. The controller 12 includes a temperature setter 12a, a temperature inputter 12b, a first temperature determinator 12c, a second temperature determinator 12d, a third temperature determinator 12e, a first electric current pass controller 12f, a mode determinator 12g, and a second electric current pass controller 12h. The units of the controller 12 are configured to communicate with each other. Each of functions of the units of the controller 12 is realized, for example, by a processor and/or a circuit or the like.

The temperature setter 12a, the temperature inputter 12b, the first temperature determinator 12c, the second temperature determinator 12d, the third temperature determinator 12e, and the first electric current pass controller 12f are control units that perform the main routine described above (see FIG. 5). The temperature setter 12a is a control unit that sets the first threshold temperature T1, the second threshold temperature T2, and the third threshold temperature T3. The temperature setter 12a is configured to execute an operation of Step S1 (see FIG. 5). The temperature inputter 12b is a control unit that acquires information of the temperature Tx of the catalyst bed from the temperature detector 28. The temperature inputter 12b is configured to execute an operation of Step S2 (see FIG. 5).

The first temperature determinator 12c is a control unit that determines a magnitude correlation by comparing the information of the temperature Tx of the catalyst bed acquired from the temperature detector 28 with the first threshold temperature T1 set by the temperature setter 12a. The first temperature determinator 12c is configured to execute an operation of Step S3 (see FIG. 5). The second temperature determinator 12d is a control unit that determines a magnitude correlation by comparing the information of the temperature Tx of the catalyst bed acquired from the temperature detector 28 with the second threshold temperature T2 set by the temperature setter 12a. The second temperature determinator 12d is configured to execute an operation of Step S5 (see FIG. 5). The third temperature determinator 12e is a control unit that determines a magnitude correlation by comparing the information of the temperature Tx of the catalyst bed acquired from the temperature detector 28 with the third threshold temperature T3 set by the temperature setter 12a. The third temperature determinator 12e is configured to execute an operation of Step S7 (see FIG. 5).

The first electric current pass controller 12f is a control unit that performs on and off control of pass of an electric current to the pair of electrodes 24, based on results acquired by each of the first temperature determinator 12c, the second temperature determinator 12d, and the third temperature determinator 12e. The first electric current pass controller 12f is configured to execute operations of Steps S4, S6, S8, and S9 (see FIG. 5).

The mode determinator 12g and the second electric current pass controller 12h are control units that perform the above-described subroutine (see FIG. 6). The mode determinator 12g is a control unit that determines the operation mode of the internal combustion engine 1. The mode determinator 12g is configured to execute operations of Step S11 and S13 (see FIG. 6). The second electric current pass controller 12h is a control unit that performs on and off control of pass of an electric current to the pair of electrodes 24, based on a result acquired by the mode determinator 12g. The second electric current pass controller 12h is configured to execute an operation of Step S12 (see FIG. 6).

Each of the functions of the units of the controller 12 may be realizable, for example, by a computer program. The computer program may be a computer program read from a non-transitory storage medium and may be a computer program downloaded via the Internet or the like. In this case, a program that causes a computer to execute the above-described exhaust gas purification method is one preferred embodiment of the invention disclosed herein. A computer readable recording medium on which each of operations of the units of the controller 12 are written is also one preferred embodiment of the invention disclosed herein. Examples of the non-transitory storage medium include, for example, a semiconductor recording medium, such as a ROM, a non-volatile memory card, or the like, an optical recording medium, such as a DVD, an MD, a CD, or the like, a magnetic recording medium, such as a magnetic tape or the like, or the like.

Specific examples of the technology disclosed herein have been described in detail above, but these are merely examples and do not limit the scope of the claims. The technology described herein includes various modifications and changes of the specific examples described above.

For example, in the electric current pass control program in the ohmic heating-type exhaust gas purification catalyst system 10 according to the preferred embodiment described above, in Step S1, predetermined temperature that has been preset is set for each of the first threshold temperature T1, the second threshold temperature T2, and the third threshold temperature T3. However, each threshold temperature is not necessarily constant at all times, and can be changed as appropriate as the main routine processing is repeated.

For example, depending on a mode in which a driver drives a vehicle, speed of rise of the temperature of the catalyst bed and frequency of rise and drop of the temperature of the catalyst bed differ, and therefore, a feedback mechanism corresponding thereto may be provided and the first threshold temperature T1 and the second threshold temperature T2 may be changed as appropriate such that a time during which the temperature of the catalyst bed is in the NOₓ purification reduction temperature range can be reduced during driving.

### [Reference Signs List]

- 1: Internal combustion engine (engine)
- 2: Exhaust pipe
- 10: Ohmic heating-type exhaust gas purification catalyst system
- 12: Controller (ECU)
- 20, 40: Ohmic heating-type catalyst device (EHC)
- 22, 42: Outer cylinder
- 24, 44: Electrode
- 25: Electrode layer
- 26: Base material (heating element)
- 28: Temperature detector (thermocouple)
- 30, 50: Catalyst unit
- 32: Cell
- 34: Partition wall
- 46: Heating element
- 51: Base material

## Claims

1. An ohmic heating-type exhaust gas purification catalyst system that performs purification of exhaust gas discharged from an internal combustion engine, the ohmic heating-type exhaust gas purification catalyst system comprising:
an ohmic heating-type catalyst device
that is arranged in an exhaust pipe of the internal combustion engine and performs purification of the exhaust gas discharged from the internal combustion engine, and
includes
an outer cylinder coupled to the exhaust pipe;
a pair of electrodes;
a catalyst unit including a catalyst bed that is contactable by the exhaust gas introduced into the outer cylinder and contains at least one type of catalytic metal that functions as a three-way catalyst;
a heating element that generates heat when an electric current is caused to pass through the pair of electrodes to heat the catalyst bed; and
a temperature detector that can detect temperature of the catalyst bed; and
a controller that controls pass of the electric current to the pair of electrodes,
wherein
the controller is configured to perform, based on information of the temperature of the catalyst bed input from the temperature detector, electric current pass control including controls of
(1) causing an electric current to pass through the pair of electrodes when the temperature of the catalyst bed is equal to or lower than a first threshold temperature T1 set in a range of 350 ± 25 °C,
(2) not causing an electric current to pass through the pair of electrodes when the temperature of the catalyst bed exceeds the first threshold temperature T1 and is equal to or lower than a second threshold temperature T2 set in a range of 450 ± 25 °C,
(3) causing an electric current to pass through the pair of electrodes when the temperature of the catalyst bed exceeds the second threshold temperature T2 and is equal to or lower than a third threshold temperature T3 set to be equal to or higher than 550 °C, and
(4) not causing an electric current to pass through the pair of electrodes when the temperature of the catalyst bed exceeds the third threshold temperature T3.

2. The ohmic heating-type exhaust gas purification catalyst system according to claim 1, wherein
the controller is configured to further perform, when performing the control of (3), a control of
(3-1) not causing an electric current to pass through the pair of electrodes in a mode in which combustion gas is not generated in the internal combustion engine.

3. The ohmic heating-type exhaust gas purification catalyst system according to claim 2, wherein
the mode in which the combustion gas is not generated in the internal combustion engine is idling stop or fuel cut.

4. The ohmic heating-type exhaust gas purification catalyst system according to any one of claims 1 to 3, wherein
the catalyst bed contains at least rhodium (Rh) as the catalytic metal.

5. The ohmic heating-type exhaust gas purification catalyst system according to any one of claims 1 to 4, wherein
the internal combustion engine is a gasoline engine or a diesel engine for a vehicle.

6. An exhaust gas purification method for purifying, using an ohmic heating-type catalyst device arranged in an exhaust pipe of an internal combustion engine, exhaust gas discharged from the internal combustion engine,
the ohmic heating-type catalyst device including an outer cylinder coupled to the exhaust pipe, a pair of electrodes, a catalyst unit including a catalyst bed that is contactable by the exhaust gas introduced into the outer cylinder and contains at least one type of catalytic metal that functions as a three-way catalyst, a heating element that generates heat when an electric current is caused to pass through the pair of electrodes to heat the catalyst bed, and a temperature detector that can detect temperature of the catalyst bed,
the exhaust gas purification method comprising:
performing, based on information of the temperature of the catalyst bed acquired from the temperature detector, electric current pass control including controls of
(1) causing an electric current to pass through the pair of electrodes when the temperature of the catalyst bed is equal to or lower than a first threshold temperature T1 set in a range of 350 ± 25 °C,
(2) not causing an electric current to pass through the pair of electrodes when the temperature of the catalyst bed exceeds the first threshold temperature T1 and is equal to or lower than a second threshold temperature T2 set in a range of 450 ± 25 °C,
(3) causing an electric current to pass through the pair of electrodes when the temperature of the catalyst bed exceeds the second threshold temperature T2 and is equal to or lower than a third threshold temperature T3 set to be equal to or higher than 550 °C, and
(4) not causing an electric current to pass through the pair of electrodes when the temperature of the catalyst bed exceeds the third threshold temperature T3.

7. The exhaust gas purification method according to claim 6, wherein
the control of (3) further includes a control of
(3-1) not causing an electric current to pass through the pair of electrodes in a mode in which combustion gas is not generated in the internal combustion engine.

8. The exhaust gas purification method according to claim 7, wherein
the mode in which the combustion gas is not generated in the internal combustion engine is idling stop or fuel cut.

9. The exhaust gas purification method according to any one of claims 6 to 8, wherein
the catalyst bed contains at least rhodium (Rh) as the catalytic metal.

10. The exhaust gas purification method according to any one of claims 6 to 9, wherein
the internal combustion engine is a gasoline engine or a diesel engine for a vehicle.

11. A control program structured to cause a computer to operate the exhaust gas purification method according to any one of claims 6 to 10.
